# EUROPÄISCHE PATENTANMELDUNG

(11) **EP 0 655 309 A1**
(43) Veröffentlichungstag der Anmeldung: **31.05.1995**
(21) Anmeldenummer: 94118250.3
(22) Anmeldetag: 19.11.1994
(51) Int. Cl.: B29C 45/67

(54) **Formschliesseinheit für eine Kunststoff-Spritzgiessmaschine**

(30) Priorität: 30.11.1993 DE 4340693
(71) Anmelder: Hehl, Karl, D-72290 Lossburg (DE)
(72) Erfinder: Hehl, Karl, D-72290 Lossburg (DE)
(74) Vertreter: Reinhardt, Harry

(57) **Zusammenfassung**

Bei einer Formschließeinheit für eine Kunststoff-Spritzgießmaschine ist ein stationärer Formträger 11 und ein beweglicher Formträger 12 vorgesehen. Ein Druckzylinder 14 mit Druckkolben 14a dient dem Aufbau des Zuhaltedrucks und wenigstens eine Kolben-Zylinder-Einheit 15 der Bewegung des beweglichen Formträgers 11. Antriebskolben oder Antriebszylinder 15b und Druckzylinder 14 sind miteinander verbunden. Der Druckzylinder bildet mit dem beweglichen Formträger 12 eine Bewegungseinheit B, die gegenüber den stationären Druckkolben verschieblich ist. Dadurch wird ein kompakter Aufbau der Formschließeinheit ermöglicht und kann dennoch den an den beweglichen Formträger zu stellenden Anforderungen genügen (Fig. 2).

## Beschreibung

Die Erfindung betrifft eine Formschließeinheit für eine Kunststoff-Spritzgießmaschine nach dem Oberbegriff des Anspruches 1.

Aus der DE 36 44 181 C1 ist eine derartige Formschließeinheit bekannt, bei der ein beweglicher Formträger mit dem Druckkolben eines Druckzylinders und Kolben von Ausgleichszylindern in Verbindung steht. Druckzylinder und Ausgleichszylinder werden durch gemeinsame Zylinderdeckel abgeschlossen, die zwischen sich Stahlhülsen aufnehmen. Koaxial zum Druckzylinder ist ein Antriebszylinder angeordnet. Da die Kolbenstangen nur mit einem geringfügigen Durchmesser am Formträger angreifen, muß der bewegliche Formträger durch eine verhältnismäßig starke Platte biegesteif ausgebildet werden. Da der einzige Verbin-dungspunkt mit der restlichen Formschließeinheit die Kolbenstangen sind, ergibt sich ohne Verstärkung zumindest der Auflagefläche des beweglichen Formträgers ein Verlust an Formparallelität. Zwar ergibt sich bereits durch die koaxiale Anordnung von Antriebszylinder und Druckzylinder eine Raumersparnis, jedoch ist der Antriebszylinder in der Achse der Formschließeinheit angeordnet, in der grundsätzlich auch eine Auswerfereinheit vorgesehen werden muß, so daß hinsichtlich eines kompakten Aufbaus der Formschließeinheit noch Wünsche offenbleiben. Schließlich müssen die hydraulischen Versorgungsleitungen teilweise flexibel ausgebildet werden, um eine Versorgung sämtlicher Zylinderräume zu ermöglichen.

Aus der DE 38 44 432 C1 ist eine Formschließeinheit bekannt, bei der zwei Druckzylinder symmetrisch zur Achse der Formschließeinheit angeordnet sind. Koaxial zur Achse sind Fahrzylinder, Auswerfereinheit und ein Ausgleichszylinder angeordnet. Diese Formschließeinheit ermöglicht zwar den Aufbau größerer Kräfte, jedoch ist es aufgrund der zentrischen Anordnung des Antriebszylinders und der somit erzwungenen immer noch nicht möglich, eine kompakte Formschließeinheit aufzubauen. Eine Abstützung des Formträgers über die Formschließeinheit selbst ist auch hier nicht möglich, da lediglich die Druckkolben und der Zylinder des Fahrzylinders mit dem beweglichen Formträger verbunden sind. Auf flexible Leitungen kann deshalb auch hier nicht verzichtet werden.

Weiter sind aus EP 281 329 A2 und DE 30 44 137 C2 vergleichbare Formschließeinheiten bekannt, bei denen jedoch stets, wie auch bei den bereits angeführten, der Druckkolben mit dem beweglichen Formträger in Verbindung steht, was zu zusätzlichen Verstärkungsmaßnahmen am beweglichen Formträger führt.

Ausgehend von diesem Stand der Technik liegt der vorliegenden Erfindung die Aufgabe zugrunde, eine Formschließeinheit der eingangs genannten Gattung derart weiterzubilden, daß sich ein kompakter Aufbau der Formschließeinheit verwirklichen läßt und zugleich der bewegliche Formträger den gestellten Anforderungen gerecht wird.

Diese Aufgabe wird durch die Merkmale des Anspruches 1 gelöst.

Gegenüber den bekannten Formschließeinheiten wird nun nicht mehr der Druckkolben bewegt, sondern der Druckzylinder. Dies führt aufgrund des größeren Durchmessers der Druckzylinder einerseits dazu, daß die Formträgerplatte über eine größere Fläche abgestützt wird, so daß allein schon deshalb eine Reduzierung der Stärke des beweglichen Formträgers möglich ist. Dieser größere Durchmesser des Zylinders gegenüber dem Kolben ermöglicht aber auch eine Abstützung der Bewegungseinheit beweglicher Formträger-Druckzylinder am Druckkolben, so daß sich eine Art von Kastenplatte ergibt, wobei der Kasten auch durch die Druckzylinder gebildet wird. Die dadurch mögliche Abstützung erlaubt eine weitere Reduzierung des Aufwands hinsichtlich des beweglichen Formträgers, was sich insbesondere bei Ausbildung des beweglichen Formträgers als Brennzuschnitt positiv bemerkbar macht.

Erstmals wird somit eine Bewegungseinheit gebildet, die zugleich hydraulischer Antrieb und beweglicher Formträger ist. Da durch den Wegfall verstärkender Maßnahmen der bewegliche Formträger in Schließrichtung kürzer ausgebildet werden kann, wird der Nachteil gerne in Kauf genommen, daß durch die Umkehrung des bekannten Prinzips nun die bewegten Massen vergrößert sind. Die Umkehrung des bekannten Prinzips schafft auch die baulichen Voraussetzungen dafür, das Hydraulikmedium lediglich noch durch unflexible Leitungen an die Zylinderräume heranzuführen, wodurch eine genauere Regelung der Formschließeinheit möglich wird.

Eine Ausbildung nach Anspruch 4 ermöglicht den Aufbau einer äußerst steifen Bewegungseinheit und damit eine weitere Verringerung hinsichtlich der Dimensionierung des beweglichen Formträgers. Durch die Spannbolzen ergibt sich nämlich mitsamt den Zylinderdeckeln eine kompakte Baugruppe, die vom ggf. ungleichmäßigen Kolbenlauf verschiedener Zylinder unabhängig ist, wodurch auch die Lebensdauer der Formschließeinheit als auch des Werkzeuges erhöht ist.

Nach den Ansprüchen 5 und 6 kann zudem der Antriebszylinder aus der Mitte entfernt werden, so daß sich bei entsprechender Anordnung auch des Ausgleichszylinders ein Freiraum ergibt, der für vorzugsweise in der Achse der Formschließeinheit anzuordnende Elemente, wie z.B. eine Auswerfereinheit nach Anspruch 7 erforderlich ist. Diese mittige Anordnung der Auswerfereinheit erlaubt auch den Einsatz von Rotationsmitteln, falls z.B. Gewindeeinsätze herzustellen sind.

Nach den Ansprüchen 8 und 9 werden sämtliche hydraulischen Leitungen im Bereich der Abschlußplatte der Formschließeinheit und durch die Kolbenstange des Druckkolbens geführt, so daß sich eine zentrale Anordnung des Hydraulikblocks ergibt, ohne daß zusätzliche Leitungen zu den einzelnen Verbrauchern zu führen sind.

Weitere vorteilhafte Ausgestaltungen ergeben sich aus den Unteransprüchen. Im folgenden wird die Erfindung in einem Ausführungsbeispiel anhand der Zeichnungen näher erläutert. Es zeigen:
- Fig. 1: eine Seitenansicht der Formschließeinheit auf einem Maschinenfuß,
- Fig. 2: einen horizontalen Schnitt durch die geöffnete Formschließeinheit gemäß Fig. 1 in Höhe der Achse a-a,
- Fig. 3: eine Darstellung gemäß Fig. 2 bei geschlossener Gießform,
- Fig. 4: einen vergrößerten Ausschnitt im Bereich der Bewegungseinheit gemäß Fig. 2,
- Fig. 5: eine teilweise geschnittene Draufsicht im Bereich der Bewegungseinheit gemäß Fig. 4,
- Fig. 6: einen Schnitt gemäß Linie 6-6 von Fig. 5.

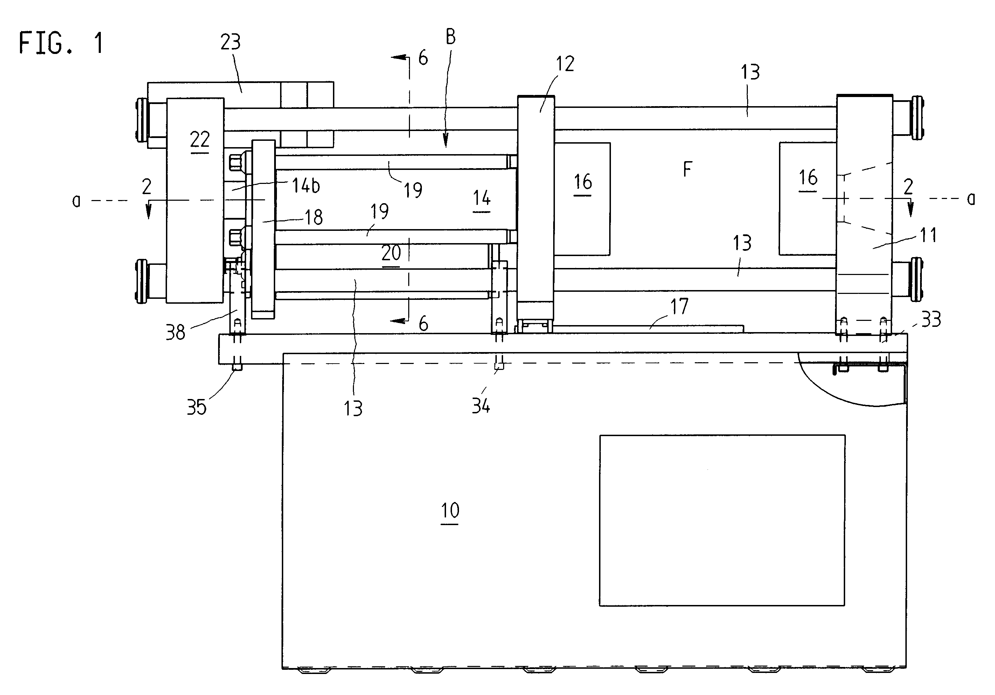

Gemäß Fig. 1 befindet sich die Formschließeinheit auf einem Maschinenfuß 10. Die Formschließeinheit umfaßt einen stationären Formträger 11, einen beweglichen Formträger 12, sowie eine Platte 22, die über Befestigungsmittel 33, 34 und 35 mit dem Maschinenfuß verbunden sind. Platte 22, beweglicher Formträger 12 und stationärer Formträger sind von Säulen 13 durchgriffen, die die von der Formschließeinheit aufgebrachten Kräfte aufnehmen. Selbstverständlich können hier auch holmlose Ausbildungen vorgenommen werden. Beweglicher Formträger und stationärer Formträger spannen zwischen sich einen Formspannraum F auf, in dem eine Gießform 16 angeordnet ist. Die Gießform wird von einer zeichnerisch nicht dargestellten Spritzgießeinheit mit plastifiziertem Material wie Kunststoffen, Pulvermaterialien oder Keramikmaterialien versorgt.

Die Formschließeinheit besitzt wenigstens einen, im Ausführungsbeispiel zwei Druckzylinder 14 mit Druckkolben 14a zum Aufbau des Zuhaltedrucks. Zur Bewegung des beweglichen Formträgers in und außer Schließposition hinsichtlich der Gießform 16 im Formspannraum F ist eine Kolben-Zylinder-Einheit 15 vorgesehen. Antriebskolben 15a oder in zeichnerisch nicht dargestellter Form Antriebszylinder 15b dieser Kolben-Zylinder-Einheit 15 und Druckzylinder 14 sind miteinander über den beweglichen Formträger 12 verbunden. Zumindest Druckzylinder 14 und beweglicher Formträger 12 bilden eine Bewegungseinheit, die gegenüber dem stationären Druckkolben 14a verschiebbar ist. Insofern ist der bewegliche Formträger 12 nicht nur auf der Führungsbahn 17, sondern auch an den Kolbenstangen des Druckzylinders beweglich gelagert. Aufgrund der großflächigen Abstützung wird der bewegliche Formträger nur noch flach und als Blechbrennzuschnitt ausgebildet.

Die Bewegungseinheit B umfaßt aber nicht nur Druckzylinder und beweglichen Formträger, sondern auch die Antriebskolben 15a der Kolben-Zylinder-Einheit und den Zylinderdeckel 18 der Druckzylinder 14. Die zwei Druckzylinder 14 im Ausführungsbeispiel umschließen koaxial die Kolben-Zylinder-Einheit 15. Genaugenommen ist die Kolbenstange 14b des Druckzylinders 14 zugleich der Antriebszylinder 15b der Kolben-Zylinder-Einheit 15. Druckzylinder 14 wie auch der noch zu besprechende Ausgleichszylinder 20 bestehen je aus einer Stahlhülse, die über den Zylinderdeckel 18 und den beweglichen Formträger 12 zum Zylinderraum verschlossen wird. Spannbolzen 19 wirken dabei als Zuganker und verspannen Zylinderdeckel 18, Stahlhülsen und beweglichen Formträger zu einer steifen Bewegungseinheit B.

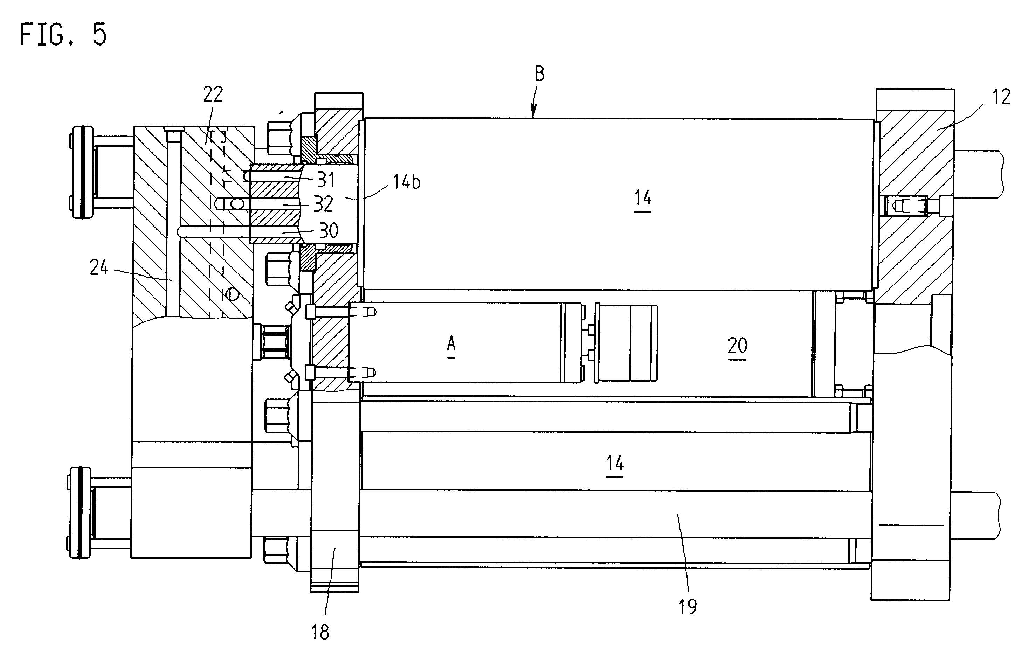

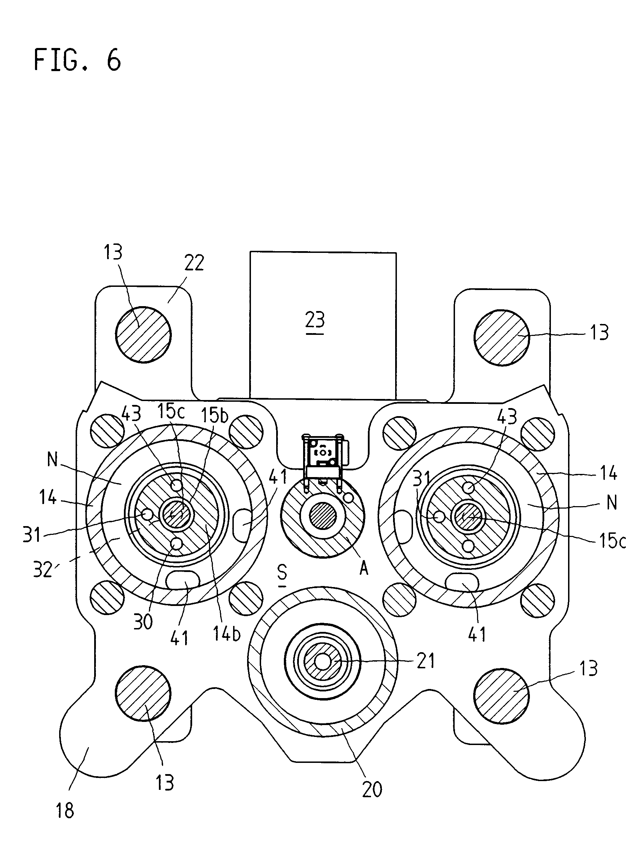

Die symmetrisch zur Achse a-a der Formschließeinheit angeordneten Druckzylinder 14 und wenigstens ein Ausgleichszylinder 20 sind so um die Achse a-a herum angeordnet, daß zwischen ihnen ein zentrischer Freiraum S gemäß Fig. 5, 6 freibleibt. In diesem Freiraum lassen sich weitere Bauelemente, vorzugsweise in der Achse a-a anordnen. Zwischen den Druckzylindern 14 ist im Ausführungsbeispiel eine Auswerfereinheit A angeordnet. Die zentrische Anordnung ermöglicht dabei den bedarfsweisen Einsatz von Rotationsmitteln. Dieser Freiraum ermöglicht aber auch eine Verkürzung der gesamten Formschließeinheit, da ein Hintereinanderschalten von Auswerfer- und Antriebszylinder nicht mehr erforderlich ist.

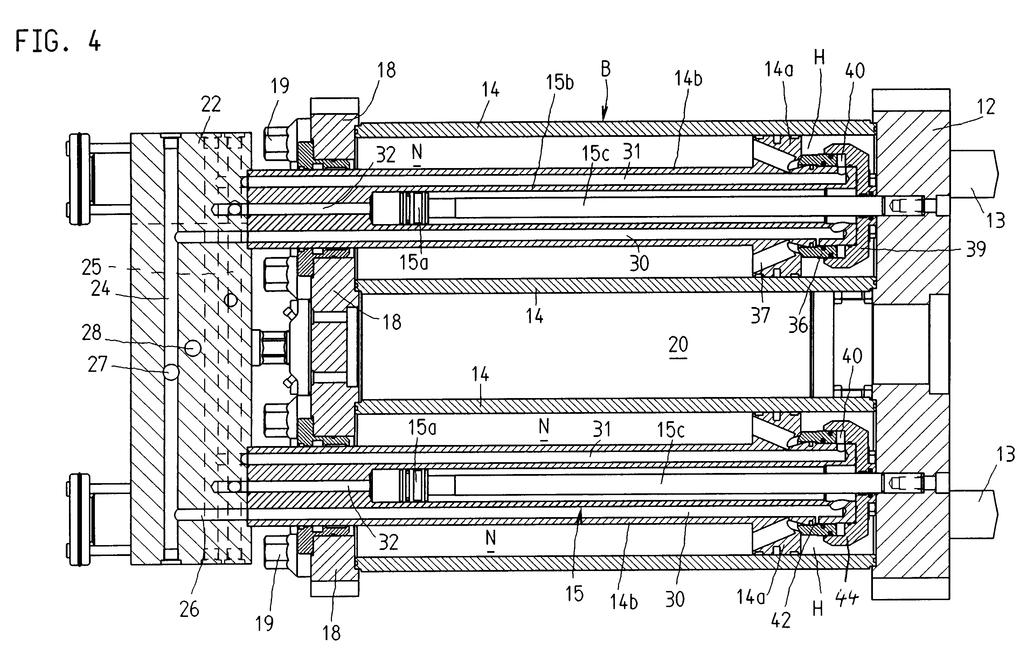

Die Platte 22 ist über Stützelemente 38 am Maschinenfuß abgestützt. Die Platte 22 trägt den der Formschließeinheit zugeordneten Hydraulikblock, so daß von dort sämtliche Bewegungen der Formschließeinheit beeinflußt werden können. Die Platte selbst dient insofern als Verteiler von Hydraulikmedium, wie sich insbesondere aus Fig. 4 ergibt. Das Hydraulikmedium gelangt dabei zunächst über Bohrungen 24, 25, 26 und 27 im Verteiler zu Axialbohrungen 30, 31, 32 in der Kolbenstange 14b des Druckkolbens 14a.

Im Druckzylinder selbst trennt der Druckkolben 14a einen Hochdruckraum H von einem Niederdruckraum N. Der Niederdruckraum steht über die Überströmkanäle 41 in offener Verbindung mit einem Ausgleichszylinder 20, der ebenfalls mit der Bewegungseinheit B verbunden ist und einen stationären Ausgleichskolben 21 aufweist. Wird Hydraulikmedium aus dem Hochdruckraum verdrängt, so gelangt bei dieser Bewegung das Öl zunächst über den Überströmkanal 37 des Druckkolbens in den Niederdruckraum und die Menge, die vom Niederdruckraum nicht aufgenommen werden kann, gelangt dann in den Ausgleichszylinder 20, der gemäß Fig. 6 unter der Achse a-a und unter der Auswerfereinheit angeordnet ist. Der Überströmkanal 37 wird bedarfsweise von einem Ringkolben verschlossen, der aktiv in und außer Verschlußstellung steuerbar ist. Zu diesem Zweck befindet sich am Ende des Druckkolbens ein Abschlußelement, wobei zwischen dem Ringkolben und dem Abschlußelement ein Zylinderraum 40 vorgesehen ist. Zum aktiven Öffnen des Ringkolbens 36 ist zudem ein Zylinderraum 42 vorgesehen. Mit diesem Zylinderraum 42 steht die den Antriebszylinder D mit Hydraulikmedium versorgende Axialbohrung 30 in offener Verbindung, so daß sich bei Bewegung der Formschließeinheit von selbst ein Öffnen des Ringkolbens 36 ergibt. Dies wird in der älteren Patentanmeldung P 43 35 006 näher erläutert, so daß diesbezüglich auf diese Anmeldung verwiesen wird.

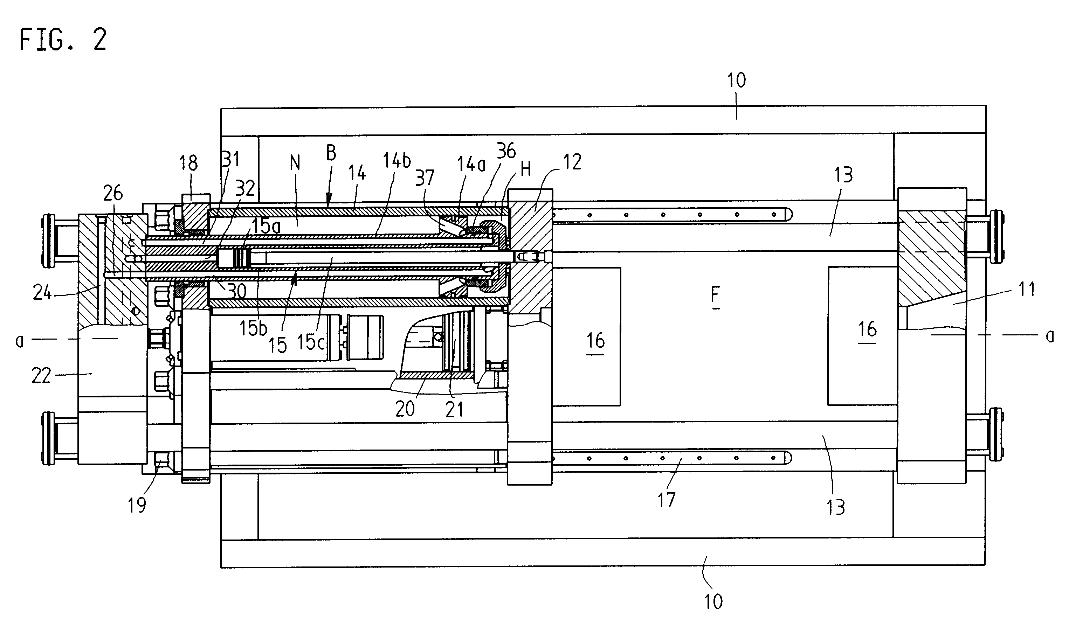

Erläuternd sei darauf hingewiesen, daß der Einfachheit halber die Bohrungen 30, 31 und 32 in den Schnittdarstellungen der Fign. 2-5 in einer Ebene dargestellt sind, obwohl sie grundsätzlich gemäß Fig. 6 angeordnet sind.

Die Vorrichtung arbeitet folgendermaßen:

Zum Schließen der Spritzgießform wird Hydraulikmedium über die Bohrung 25 in die Axialbohrung 32 geleitet. Dieses Hydraulikmedium trifft auf den Antriebskolben 15a, der sich daraufhin in den Figuren nach rechts bewegt. Durch seine Bewegung verringert sich der gegenüberliegende Zylinderraum, wobei Hydraulikmedium über die Axialbohrung 30 sowie die Bohrungen 26, 24 und 27 der Platte 22 abgeführt wird. Der dabei entstehende Druck führt auch zu einer Beaufschlagung des Hydraulikraums 42 und somit zur zuverlässigen Öffnung des Überströmkanals 37 im Druckkolben 14a. Da der Antriebskolben über die Kolbenstange 15c mit dem beweglichen Formträger verbunden ist, und mit diesem wiederum die Spannbolzen 19, der Ventildeckel 18 und auch die Druckzylinder 14 führt diese Bewegung auch zu einer Verringerung des Niederdruckraums und zu einer Vergrößerung des Hochdruckraums H.

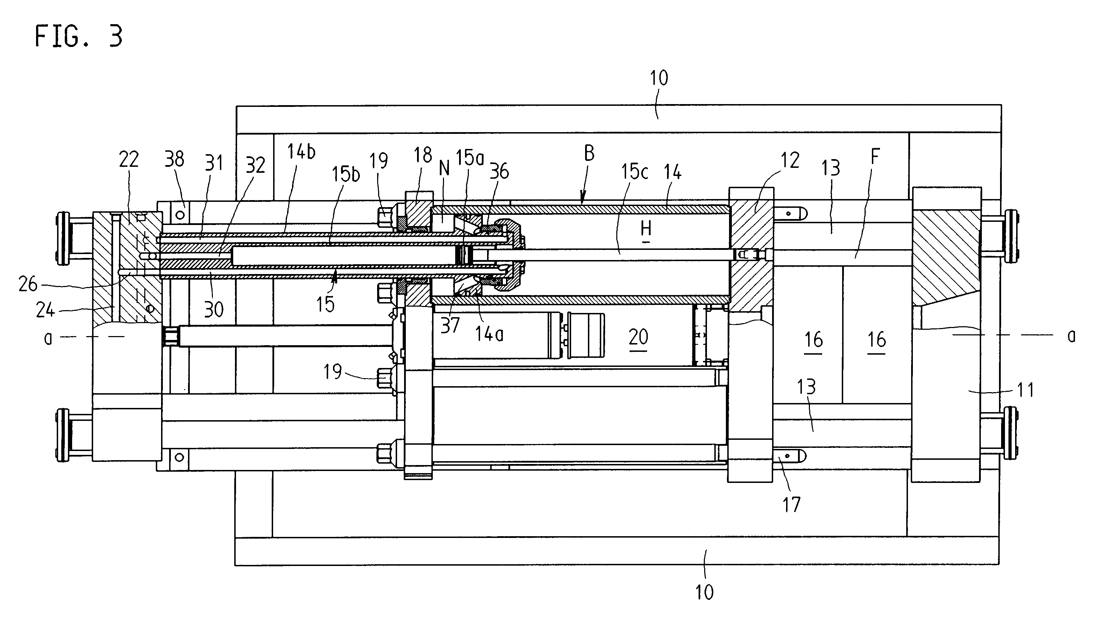

Befindet sich die Formschließeinheit dann in einer Stellung gemäß Fig. 3 kann der Zuhaltedruck über die Axialbohrung 43 (Fig. 6) aufgebracht werden. Zuvor wird jedoch über die Bohrung 28 und die Axialbohrung 31 der Zylinderraum 40 beaufschlagt und durch Bewegung des Ringkolbens 36 der Überströmkanal 37 verschlossen.

Zum Öffnen wird Hydraulikmedium über die Bohrungen 24 und 26 sowie die Axialbohrung 30 der Kolben-Zylinder-Einheit 15 zugeführt, wodurch sich eine Bewegung des Antriebskolbens in Fig. 3 nach links ergibt. Durch die Beaufschlagung der Axialbohrung 30 wird zugleich der Zylinderraum 42 geöffnet, so daß auch der Überströmkanal 37 in offener Stellung ist. Bewegt sich daher die Bewegungseinheit B nach links, wird der Niederdruckraum vergrößert und der Hochdruckraum verkleinert. Über die Überströmkanäle 41 gelangt gleichzeitig Hydraulikmedium in den Ausgleichszylinder 20.

## Patentansprüche

1. Formschließeinheit für eine Kunststoff-Spritzgießmaschine mit
- einem stationären Formträger (11) und einem beweglichen Formträger (12), die zwischen sich einen Formspannraum (F) ausbilden,
- wenigstens einem Druckzylinder (14) mit Druckkolben (14a) zum Aufbau des Zuhaltedrucks,
- wenigstens einer Kolben-Zylinder-Einheit (15) zum Bewegen des beweglichen Formträgers (11) in und ausser Schließposition einer Gießform (16) im Formspannraum (F), wobei der Antriebskolben (15a) oder der Antriebszylinder (15) dieser Kolben-Zylinder-Einheit und der Druckzylinder miteinander verbunden sind,
dadurch gekennzeichnet, daß der Druckzylinder (14) mit dem beweglichen Formträger (12) eine Bewegungseinheit (B) bildet, die gegenüber dem stationären Druckkolben (14a) verschieblich ist.

2. Formschließeinheit nach Anspruch 1, dadurch gekennzeichnet, daß der bewegliche Formträger (12) auf einer Führungsbahn (17) und an der Kolbenstange (14b) des Druckkolbens (14a) beweglich gelagert ist.

3. Formschließeinheit nach Anspruch 1 oder 2, dadurch gekennzeichnet, daß Antriebskolben (15a), Druckzylinder (14) mit seinem Zylinderdeckel (18) und beweglicher Formträger (12) die Bewegungseinheit (B) bilden, wobei der Druckzylinder (14) den Antriebszylinder (15b) koaxial umschließt.

4. Formschließeinheit nach einem der vorhergehenden Ansprüche, dadurch gekennzeichnet, daß der als Stahlhülse ausgebildete Druckzylinder (14) über einen Zylinderdeckel (18) und den beweglichen Formträger (12) verschlossen ist, wobei der Zylinderdeckel über Spannbolzen (19) am beweglichen Formträger (12) befestigt ist.

5. Formschließeinheit nach einem der vorhergehenden Ansprüche, dadurch gekennzeichnet, daß der Druckkolben (14a) des Druckzylinders (14) einen Hochdruckraum (H) von einem Niederdruckraum (N) trennt, der in offener Verbindung mit einem Ausgleichszylinder (20) steht, der mit der Bewegungseinheit (B) verbunden ist und einen stationären Ausgleichskolben (21) aufweist.

6. Formschließeinheit nach einem der vorhergehenden Ansprüche, dadurch gekennzeichnet, daß zwei symmetrisch zur Achse (a-a) angeordnete Druckzylinder (14) und wenigstens ein Ausgleichszylinder (20) um die Achse (a-a) herum angeordnet sind und zwischen sich einen Freiraum (S) zur Anordnung weiterer Elemente, vorzugsweise in der Achse bilden.

7. Formschließeinheit nach Anspruch 6, dadurch gekennzeichnet, daß zwischen den Druckzylindern (14) eine mit der Bewegungseinheit (B) verbundene Auswerfereinheit (A) angeordnet ist, die ggf. Rotationsmittel aufweist.

8. Formschließeinheit nach einem der vorhergehenden Ansprüche, dadurch gekennzeichnet, daß die Druckkolben (14a) mit einer die Formschließeinheit abschließenden Platte (22) stationär verbunden sind, die den Hydraulikblock (23) für die Formschließeinheit trägt.

9. Formschließeinheit nach Anspruch 8, dadurch gekennzeichnet, daß die Platte (22) Bohrungen (24, 25, 26, 27) zur Verteilung des Hydraulikmediums aufweist, die in Axialbohrungen (30, 31, 32) der Kolbenstange (14a) münden.
